# DEMANDE DE BREVET EUROPEEN

(11) **EP 1 619 173 A1**
(43) Date de publication de la demande: **25.01.2006**
(21) Numéro de dépôt: 05356126.2
(22) Date de dépôt: 22.07.2005
(51) Int. Cl.: C02F 3/34

(54) **Procédé de réduction de la nuisance olfactive d'effluents par biodigestion par des champignons filamenteux**

(30) Priorité: 22.07.2004 FR 0408124
(71) Demandeur: Biovitis, 15400 Saint-Etienne-de-Chomeil (FR)
(72) Inventeur: Berthon, Jean-Yves, 63540 Romagnat (FR); Grizard, Damien, 63000 Clermont Ferrand (FR)
(74) Mandataire: Tripoz, Inès

(57) **Abrégé**

Procédé de réduction de la nuisance olfactive d'effluents organiques, en particulier d'élevage, agroalimentaires, industriels ou urbains, caractérisé en ce qu'il comporte une étape de biodigestion par des champignons filamenteux en culture libre dans ces effluents en présence d'oxygène.

## Description

La plupart des effluents d'élevage, agro-alimentaires, industriels ou urbains sont « malodorants ». Ces émanations de « mauvaises odeurs » constituent dans notre société l'une des nuisances les plus importantes. Cependant la difficulté de les mesurer et l'évaluation subjective qui en est faite, rendent la possibilité de réglementer ces émanations et donc de réduire leur émission quasiment impossible. A l'heure actuelle, ces désagréments restent un motif privilégié de demandes en dommages et intérêts, dans le cadre des troubles de voisinage; l'abondante jurisprudence en matière d'odeurs de porcheries témoigne par exemple de l'importance de ces nuisances et de l'impuissance à les combattre.

Les procédés de retraitement actuellement utilisés, s'ils donnent satisfaction sur le plan de la réduction de la quantité de ces effluents, de la réduction de la matière organique et de l'abaissement de la D.C.O. (demande chimique en oxygène), comme les procédés décrits dans WO 92/11210, FR 2 815 028 et FR 2 796 376, ou les procédés mis en oeuvre dans les stations d'épuration des eaux urbaines, ne traitent pas spécifiquement le problème des odeurs, même si en raison de la diminution des charges organiques, les émanations olfactives sont nécessairement réduites.
On connaît de FR 2837 834, l'utilisation d'un inoculum fongique, pour traiter des effluents riches en matière organique, comportant des champignons filamenteux. Cette utilisation comme les procédés classiques peut entraîner une réduction des nuisances olfactives mais seulement en raison de la diminution de la charge organique.
Sans prise en compte particulière des nuisances olfactives existantes ou générées par le traitement lui-même, les lieux de retraitement si ils remplissent leur rôle s'agissant de la diminution de la matière organique génèrent souvent des nuisances dues aux traitements, que sont les nuisances olfactives.
Certains procédés peuvent même dans certaines de leurs étapes augmenter les rejets et aggraver ces nuisances olfactives qui perdurent et dont l'impact est encore augmenté par les opérations d'épandage des boues dites boues d'épuration, résidu classique d'une station d'épuration.

On connaît de US 4 225 381, un procédé de réduction des mauvaises odeurs par utilisation de champignons filamenteux ceux-ci étant cultivés dans des milieux spécifiques et les effluents à traiter étant ensuite amenés dans ces milieux pour traitement et élimination des nuisances olfactives. On a donc dans la mise en oeuvre de ce procédé, une étape supplémentaire et distincte du traitement plus classique de la réduction en charge organique, qui augment la charge organique, puisque les milieux spécifiques contiennent des nutriments qui sont nécessairement des composés organiques.
Ainsi, le problème de la réduction spécifique des nuisances olfactives dans les procédés d'épuration, que ces nuisances soient dues aux procédés mis en oeuvre ou inhérentes à la nature des fluides à traiter, n'est jamais résolu de façon satisfaisante.

La présent invention permet de traiter les nuisances olfactives, par élimination spécifique de celles-ci, en cours de processus d'épuration et dès leur formation si elles résultent du procédé lui-même, sans installation particulière et permet également de les masquer si la formation des molécules responsables de mauvaises odeurs est indispensable, par exemple dans un processus de dégradation particulière.
Le masquage est réalisé par la génération in situ de molécules ayant des notes aromatiques masquantes.
Ces nuisances sont difficiles à caractériser, mais néanmoins quelques éléments de caractérisation peuvent être donnés.

Sur le plan chimique, de nombreuses molécules volatiles peuvent occasionner cette gêne. Pour illustrer cela, dans le tableau ci-dessous figurent quelques exemples de structures et molécules chimiques ainsi que les descriptifs d'odeurs correspondants pouvant agir comme de puissantes sources de nuisances au sein des effluents :

| Catégories/Noms des molécules | Descriptions des nuisances olfactives |
|---|---|
| **Composés soufrés** | |
| sulfure d'hydrogène | oeuf pourri |
| sulfure de diméthyle | oignon, putride, soufrée, chou |
| disulfure de diméthyle | oignon, rance, soufrée |
| trisulfure de diméthyle | ail, pénétrante, soufrée, chou |
| méthanethiol | ail, ordures, piquante, âcre, soufrée, chou pourri |
| **Composés azotés** | |
| scatole | fécale, putride |
| **Molécules benzéniques** | |
| benzène | aromatique, glue, solvant, essence |
| toluène | floral, piquante, solvant, caoutchouteux |
| **Alcools** | |
| phénol | médical, goudron, doux, âcre, aromatique |
| p-crésol | médical, moisi, piquante, fumé, goudron, lourd, |
| **Alcanes** | |
| octane | gazole |
| **Alcènes** | |
| isobutylène | gaz de houille |
| **Cétones** | |
| butenone - 2 | piquante, âcre, agressive |
| **Esters** | |
| propyl butanoate | fruité, rance, écoeurante, sueur |
| **Acides carboxyliques** | |
| acide butanoïque | beurre rance, fromage, putride, sueur |
| acide pentanoïque | doux, fécal, putride, rance, fromage |
| acide isovalérique | fécal, fromage, fruit trop mûr, putride, sueur, pieds |

La présente invention permet de résoudre ce problème et de réduire ces nuisances olfactives.
La présente invention concerne un procédé de réduction de la nuisance olfactive d'effluents organiques, par exemple d'élevage, agroalimentaires, industriels ou urbains, caractérisé en ce qu'il comporte une étape de biodigestion par des champignons filamenteux en culture libre de ces effluents en présence d'oxygène.
Le terme « effluent » selon l'invention s'applique à tout déchet à l'état liquide mais aussi gazeux.

L'invention concerne donc un procédé de réduction de la nuisance olfactive d'effluents organiques, malodorants, comportant une étape de biodigestion par des champignons filamenteux en culture libre de ces effluents en présence d'oxygène caractérisé en ce que l'étape de biodigestion comporte
- une étape de destruction de molécules volatiles malodorantes ou de leurs précurseurs et,
- une étape de masquage par catalyse de la bio-formation dans l'effluent de molécules volatiles ayant des notes aromatiques masquantes ou de leurs précurseurs.

Dans le procédé selon l'invention, les molécules volatiles malodorantes ou leurs précurseurs sont choisis parmi les composés soufrés tels que le disulfure de carbone, le sulfure de diméthyle, le disulfure de diméthyle, le trisulfure de diméthyle, le disulfure de méthyle prolpyl, le thiirane, le propane-2-(méthylthio), le butane-2-méthylthio, le pentane-1-(méthylthio) ou le méthanethiol, les acides, les alcools et les furanes.

Dans le procédé selon l'invention, les molécules volatiles ayant des notes aromatiques masquantes ou leurs précurseurs sont choisis dans le groupe des esters ou cétones tels que la butenone-2, le méthyl pentanoate ou le méthyl isovalérate.

Elle concerne également un procédé caractérisé en ce qu'il comporte :
a) une étape de détermination d'au moins l'une de la DCO (demande chimique en oxygène) ou de la DBO (demande biochimique en oxygène) de l'effluent à traiter,
b) une étape de la détermination du taux d'inoculation,
c) une étape d'ensemencement de l'effluent par un inoculum fongique,
d) une étape de biodigestion de l'effluent par lesdits champignons filamenteux en culture libre en présence d'oxygène.

Dans un mode de réalisation l'étape de biodigestion comporte :
- une étape de destruction de molécules volatiles malodorantes ou de leurs précurseurs et,
- une étape de masquage par catalyse de la bio-formation dans l'effluent de molécules volatiles ayant des notes aromatiques masquantes ou de leurs précurseurs.

Dans un mode de réalisation particulier, une étape d'addition d'un précurseur de formation de molécules ayant des notes aromatiques manquantes peut être prévue, si la composition chimique de l'effluent à traiter n'est pas suffisamment riche en de tels composés.

Comme dit précédemment, l'effluent peut être liquide et/ou gazeux. Lorsqu'il est gazeux, l'inoculum fongique est avantageusement supporté sur une phase solide, par exemple par absorption. Cette phase solide peut être de nature organique ou minérale.

La DCO mesure la quantité de matière totale minérale et organique oxydable, donc pouvant être en partie biodégradée.
La DBO, et de préférence la DBO₅ mesure la demande biochimique en oxygène (après cinq jours à 20°C pour la DBO₅) et représente uniquement la fraction de matière oxydable, organique, c'est-à-dire les molécules organiques volatiles malodorantes.

Dans le procédé selon l'invention, l'inoculum fongique utilisé à l'étape c) comporte au moins une souche de champignons choisie dans le groupe constitué par les espèces suivantes :
- *Aspergillus phoenicis*
- *Chaetomium globotosum*
- *Galactomyces geotrichum*
- *Mucor hiemalis*
- *Paecilomyces variotii*
- *Fusarium equisetii*
- *Trichoderma viride*
- *Penicillium chrysogenum*
- *Trichoderma longibradriatum*
- *Trichoderma harzianum*
- *Aspergillus niger.*

L'utilisation concerne également l'utilisation d'au moins une souche de champignons choisie dans le groupe constitué par les espèces suivantes:
- *Aspergillus phoenicis*
- *Chaetomium globotosum*
- *Galactomyces geotrichum*
- *Mucor hiemalis*
- *Paecilomyces variotii*
- *Fusarium equisetii*
- *Trichoderma viride*
- *Penicillium chrysogenum*
- *Trichoderma longibradriatum*
- *Trichoderma harzianum*
- *Aspergillus niger,*

pour la préparation d'un inoculum fongique destiné à la réduction de la nuisance olfactive d'effluents par biodigestion.

On entend par précurseur une molécule chimique volatile ou non, capable dans un milieu selon l'invention de se transformer pour donner naissance à une molécule volatile malodorante, ou ayant des notes aromatiques masquantes.

L'un des avantages de l'invention est qu'elle est utilisable sans installation particulière et utilisable avec n'importe quel système de traitement. Elle permet ainsi d'améliorer les performances des systèmes épuratoires existants et d'être adaptable à n'importe quel type d'effluent.

L'inoculum fongique sera inoculé en fonction de la DCO de l'effluent, selon un taux d'inoculation qui pourra varier en fonction de la nature de l'effluent mais également en fonction du stade de traitement par un procédé d'épuration classique auquel il se trouve.

C'est-à-dire que le procédé selon l'invention pourra être appliqué sur des effluents primaires mais également sur des boues avant épandage ou dans les effluents en cours de traitement.

L'ajout de l'inoculum fongique en fonction de la qualité de l'effluent à traiter sera effectué soit sous forme solide, soit sous forme liquide.

Les souches correspondant aux espèces exemplifiées et mises en oeuvre dans le procédé ou comprises dans l'inoculum fongique selon l'invention ont été déposées auprès de la CNCM, sous le n° CNCM I-2826 pour *Aspergillus phoenicis,* sous le n° CNCM 1-2996 pour *Chaetomium globotosum,* sous le n° CNCM 1-2825 pour *Galactomyces geotrichum,* sous le n° CNCM 1-2824 pour Mucor hiemalis, sous le n° CNCM I-2995 pour *Paecilomyces variotii*, sous le n° CNCM 1-2821 pour *Fusarium equisetii,* sous le n° CNCM 1-2822 pour *Trichoderma viride,* sous le n° CNCM 1-2997 pour *Penicillium chrysogenum,* sous le n° CNCM 1-3243 pour *Trichoderma harzianum,* sous le n° CNCM I-3244 pour *Trichoderma longibradriatrum* et sous le n° CNCM 1-3245 pour *Aspergillus niger.*

Les champignons sont des organismes eucaryotes, sans chlorophylle et dont l'appareil végétatif, dépourvu de tige, de racine et de feuille est appelé thalle. Le thalle peut être unicellulaire, dissocié et bourgeonnant (levures) ou filamenteux (champignons filamenteux ou moisissures ou mycètes ou fungi), habituellement limité par une paroi rigide. Le nombre de champignons filamenteux est, à l'heure actuelle, estimé à environ 500 000 espèces connues et au moins autant à découvrir. Les champignons filamenteux (moisissures) se différencient des Procaryotes (bactéries) par le fait que leurs cellules sont généralement de taille supérieure, contenant un noyau, des vacuoles et des mitochondries, ce qui est d'ailleurs, spécifique aux cellules Eucaryotes.

Les champignons sont incapables d'effectuer la photosynthèse et tirent obligatoirement leur énergie de l'oxydation des composés chimiques organiques.

Ils vivent aux dépens de la matière organique en décomposition, ce sont des saprophytes. Concernant les besoins nutritionnels : à la fois hétérotrophes vis à vis du carbone (micro-organismes qui ont un besoin nutritif obligatoire d'au moins une substance organique servant de source d'énergie) et dépourvus du pouvoir de phagocyter des substances solides (à la différence des animaux), ils sont réduits à absorber des substances organiques et minérales dissoutes.

Dotés d'un arsenal enzymatique très varié, les champignons filamenteux sont capables de coloniser tous les milieux (colonisation de tous les substrats terrestres riches en matières organiques). Ce sont les plus importants détrivores de la biosphère. Ainsi ils sont naturellement présents dans le sol, l'air et l'eau, et sont capables pour certaines souches de tolérer des conditions extrêmes de pH (pH optimal 3 à 9), de températures de 0°C à plus de 40°C (température optimale, 22 à 30°C pour les saprophytes) et même de teneur en eau très faible.

Ces réactions de bio-transformation ou de bio-dégradation de la matière organique sont dues à des productions de protéines spéciales par les champignons filamenteux : les enzymes, véritables biocatalyseurs de toutes les réactions biochimiques. Les principales activités enzymatiques figurent dans le tableau suivant :

| | |
|---|---|
| **1 - Hydrolases** | Dégradation d'une molécule du substrat par l'eau et fixation (-H et -OH) |
| Osidases : | Attaque des osides |
| - saccharase | saccharose -> glucose + fructose |
| - amylase | amidon -> dextrine + maltose |
| - cellulase | cellulose -> sucres simples + cellulodextrines |
| - pectinase | pectines -> ac. galacturonique + galactose |
| - phosphatases | alcool-phosphate -> alcool + phosphate |
| Amidases : | Destruction amide |
| - uréase | urée -> ammoniac |
| -asparaginase | asparagine -> ac. aspartique + ammoniac |
| Protéases | Protéines -> Acides aminés ou peptides |
| **2 - Transférases et isomérases** | Transfert des groupes ou des radicaux d'une molécule à une autre ou changement de configuration |
| **3 - Oxydo-réductases** | Oxydo-réduction |
| - oxydases et catalases | Réduction d'oxygène gazeux |
| - hydrogénases | |
| **4 - Clastases ou Synthétases** | Rupture ou formation d'une liaison |

Ainsi grâce aux divers systèmes enzymatiques ci-dessus évoqués, les différentes molécules volatiles malodorantes ou leurs précurseurs vont être en grande partie annulés, biodégradés ou biotransformés, en particulier en molécules volatiles ayant des notes aromatiques, ou leurs précurseurs.

Grâce à ces propriétés métaboliques, la charge organique malodorante va être éliminée principalement par oxydation sous forme de CO₂ et d'eau, et/ou transformée en molécules volatiles ayant des notes aromatiques masquantes.

Au niveau de ces molécules volatiles, les champignons filamenteux vont grâce à leurs systèmes enzymatiques performants agir de deux manières :
- un effet direct de destruction: d'une manière générale, l'inoculation des effluents par des champignons filamenteux assure en conditions aérobies la décomposition systématique des molécules organiques. Parmi ces substrats organiques, les teneurs en molécules volatiles malodorantes sont fortement diminuées. En retour, la biodestruction de ces composés va éviter la formation de composés malodorants résiduels aussi bien au moment du stockage qu'au moment d'un épandage ou d'une irrigation éventuelle. Ainsi, l'utilisation d'un inoculum fongique permet une élimination durable des nuisances olfactives, sans émission d'odeur post-traitement. Les molécules cibles des systèmes enzymatiques fongiques sont préférentiellement les composés soufrés tels que le disulfure de carbone, le sulfure de diméthyle, le disulfure de diméthyle, le trisulfure de diméthyle, le disulfure de méthyle propyl, le thiirane, le propane-2-(méthylthio), le butane-2-(méthylthio), le pentane-1-(méthylthio) et le méthanethiol. Dans une moindre mesure les acides, les alcools et les furanes sont déplétés.
- et/ou un effet indirect masquant : les systèmes enzymatiques de l'inoculum fongique catalysent la bio-formation dans l'effluent de molécules volatiles ayant des notes aromatiques plutôt plaisantes et masquantes. Il s'agit par exemple, d'une augmentation de l'abondance de certains esters ou cétones (notamment la butanone-2, le méthyl pentanoate ou le méthyl isovalérate). En effet, ces composés sont caractérisés par des odeurs de type « foin et pomme vertes » plutôt agréables, et masquant fortement les nuisances associées aux autres molécules, notamment celles à connotations désagréables des acides carboxyliques et des soufrés.

Au moins une des souches choisie dans le groupe constitué par les espèces suivantes est utilisée dans le procédé selon l'invention pour préparer l'inoculum fongique, à savoir :
*Trichoderma longibradriatum* (Numéro d'ordre CNCM, CNCM I-3244)
*Aspergillus niger* (Numéro d'ordre CNCM, CNCM I-3245)
*Aspergillus phoenicis* (Numéro d'ordre CNCM, CNCM I-2826)
*Chaetomium globosum* (Numéro d'ordre CNCM, CNCM I-2996)
Galactomyces *geotrichum* (Numéro d'ordre CNCM, CNCM I-2825)
*Mucor hiemalis* (Numéro d'ordre CNCM, CNCM I-2824)
*Paecilomyces variotii* (Numéro d'ordre CNCM, CNCM I-2995)
*Fusarium equisetii* (Numéro d'ordre CNCM, CNCM I-2821)
*Trichoderma viride* (Numéro d'ordre CNCM, CNCM I-2822)
*Penicillium chrysogenum* (Numéro d'ordre CNCM, CNCM I-2997)
*Trichoderma harzianum* (Numéro d'ordre CNCM, CNCM I-2996)

Les caractéristiques des différentes espèces ci-dessus représentées sont les suivantes :
***Aspergillus* :** Thalle à mycélium cloisonné portant de nombreux conidiophores dressés, non ramifiés, terminés en vésicules. Phialides formées directement sur la vésicule (têtes conidiennes unisériées) ou portées sur des métules ou stérigmates (têtes conidiennes bisériées). Conidies sèches, en chaînes divergentes ou associées en colonnes compactes, unicellulaires, globuleuses, sub-globuleuses ou elliptiques, lisses ou ornementées, hyalines ou pigmentées en jaune, brun, noir ou vert. Cellules à paroi épaissie (Hülle cells) et sclérotes parfois présents.
***Fusarium*** : Thalle à croissance généralement rapide, blanc à crème, jaune, brunâtre, rose, rouge, violet ou lilas. Conidiophores parfois très ramifiés formant sur le thalle des coussinets (sporodochies) et portant des masses de spores d'aspect graisseux. Phialides plus ou moins allongées pouvant produire deux types de conidies : des macroconidies fusiformes, souvent courbées, pluriseptées, avec une cellule basale pédicellée, portant une sorte de talon ; des microconidies petites, O-2-septées, piriformes, fusiformes ou ovoïdes (certaines espèces produisent les deux types de spores, d'autres ne forment que des macroconidies). Chlamydospores présentes ou absentes, terminales ou intercalaires, différenciées par le mycélium ou par les conidies.
***Geotrichum*** : Thalle à croissance rapide, mince, lisse, blanc, présentant un aspect de levure. Arthrospores cylindriques, arrondies aux extrémités, de taille variable, 6-25 x 3-9 □m.
***Mucor** :* Thalle siphoné, velouté ou floconneux, blanc, gris ou noir. Pas de stolons. Sporocystophores dressés, toujours terminés par un sporocyste, simples ou à ramification sympodiale, monopodiale ou mixte. Sporocystes globuleux, blancs ou un peu colorés, sans apophyse, pourvus d'une columelle, multisporés. Spores de forme variée, lisses ou granuleuses. Chlamydospores parfois présentes. Zygospores sans appendices sur les suspenseurs.
***Paecilomyces*** : Thalle blanc, rose, brun-jaune à brun-verdâtre mais jamais vert. Structure sporifères simples ou agrégées en synnémas constituées de conidiophores ramifiés portant des phialides de forme caractéristique, cylindriques ou renflées dans leur partie inférieure et s'atténuant brusquement en un long col étroit. Conidies unicellulaires, lisses ou échinulées, le plus souvent ovées, disposées en très longues chaînes basipétales, divergentes ou enchevêtrées. Chlamydospores à paroi épaisse, isolées ou en courtes chaînes, lisses ou ornementées, parfois absentes.
***Chaetomium** :* Périthèces ostiolés, noirs, à col court ou indistinct, garnis de nombreux poils simples ou ramifiés, raides, ondulés ou plus ou moins spiralés. Asques cylindriques ou claviformes, octosporés. Ascospores souvent émises en masse au sommet des périthèces, unicellulaires, noires, lisses, globuleuses, ovoïdes ou elliptiques, pourvues d'un ou de deux pores germinatifs. Le genre groupe une centaine d'espèces cellulolytiques d'un intérêt évident en raison d'une production de mycotoxines, des biodégradations qu'elles provoquent, de leur utilisation dans la transformation de la cellulose et la production de protéines.
***Penicillium** :* Thalle vert ou plus rarement blanc, dont la texture est souvent utilisée comme critère de détermination. Conidiophores isolés, groupés en faisceaux lâches ou agrégés en corémies bien définies, hyalins, lisses ou granuleux, simples ou ramifiés, terminés par un pénicille. Pénicilles constitués, suivant le cas, soit d'un simple verticille de phialides (monoverticillés), soit d'un verticille de ramification (métules) portant les phialides (biverticillés), soit de plusieurs verticilles successifs comportant des ramifications, des métules et des phialides (triverticillés, quadriverticillés, etc ...). Les caractères des pénicilles servent à la différenciation des groupes et des espèces. Phialides ampulliformes ou lancéolées. Conidies disposées en longues chaînes, globuleuses, elliptiques, cylindriques ou fusiformes, lisses ou rugueuses, hyalines, grisâtres ou verdâtres. Sclérotes parfois présents. Certains Penicillium présentent une reproduction sexuée avec formation d'ascocarpes.
***Trichoderma** :* Thalle à croissance rapide, d'abord lisse puis plus ou moins floconneux, souvent zoné, blanc ou vert. Conidiophores en touffes plus ou moins compactes, très ramifiés, irrégulièrement verticillés avec des ramifications à angle droit. Phialides ovoïdes à ellipsoidales, atténuées au sommet, solitaires ou en groupe, généralement perpendiculaires à l'axe. Conidies réunies en glomérules au sommet des phialides, unicellulaires, parfois hyalines, le plus souvent vertes, lisses ou granuleuses. Clamydospores parfois présentes.

A titre d'exemple, la préparation et la mise en oeuvre d'un inoculum fongique, d'une part, et les résultats de traitements d'un effluent par un inoculum selon l'invention, d'autre part, sont décrits ci-après.

### Exemple 1 : Procédés de préparation et de mise en oeuvre des inoculums

### 1) Isolement de souches indigènes et mise en collection.

Les isolements sont réalisés en trois étapes :
**1ère étape :**
   1 g (ou 1 ml) d'échantillon du milieu à traiter sont mis en solution ou en suspension dans 9 g de solution diluante (dilution 10⁻¹).
   La solution diluante est de préférence une solution aqueuse, de 2 g de peptone de caséine, de 9 g de chlorure de sodium contenant 5 mL de Tween dans un litre d'eau déminéralisée ; elle est stérilisée préalablement à son utilisation par autoclavage pendant 15 à 20 minutes à 118-122°C°.
   La solution et/ou la suspension obtenue est homogénéisée par agitation.
   Une série de dilutions successives sont effectuées de 10⁻¹ à 10⁻⁶ immédiatement après la mise en solution ou en suspension.
   Des milieux de culture contenus dans des boîtes de diamètre 100 mm sont inoculés avec 0,1 ml de dilution.
   Les milieux de culture utilisés sont :
   - PDA (Potato Dextrose Agar, Biokar Diagnostics, BK 095)
   - YGC (Chloramphenicol Glucose Agar, Biokar Diagnostics, BK 007HA)
   - Sabouraud + Chloramphénicol (Sabouraud Chloramphenicol Agar, Biokar Diagnostics, BK 027HA).

   L'incubation est maintenue pendant 4 jours à 25°C.
**2ème étape :**
   Les colonies obtenues à l'étape 1 sont sélectionnées visuellement et prélevées.
   Après prélèvement, ces colonies sont diluées dans la solution diluante (de 10⁻¹ à 10⁻⁶). Des milieux de culture identiques à ceux utilisés dans l'étape 1 sont inoculés avec 0,1 ml de solution obtenue précédemment.
   L'incubation est maintenue pendant 4 jours à 25°C.
**3ème étape :**
   A partir de prélèvements dilués comme dans l'étape 2, des milieux de culture Sabouraud + Chloramphénicol sont inoculés par piqûre centrale et l'incubation est poursuivie.
   On obtient des souches isolées qui sont ensuite mises en culture sur gélose inclinée (Slants sur Sabouraud) pendant 7 à 15 jours à 25°C.
   La biomasse est diluée (9 ml de solution diluante par Slants) et « récoltée » à partir des géloses inclinées. Le mélange est passé au VORTEX et le surnageant obtenu peut être conditionné par addition à 1,4 ml de surnageant de 0,4 ml de glycérol stérile et congelé à - 80°C, dans des tubes cryogéniques permettant un stockage aisé des souches.

### 2) Préparation d'un inoculum industriel

Les inoculums industriels permettant de traiter de grands volumes d'effluents sont préparés à partir du contenu des tubes cryogéniques précédemment conditionnés, par dilution de ce contenu dans 1 à 5 l de milieu liquide de production. Ces milieux liquides de production sont des milieux classiques tels que milieux de CZAPEK ou de MOSSEL ou milieu malté.
Au bout de 4 à 7 jours, il y a un développement des souches et cette production peut être utilisée comme inoculum secondaire pour la production de centaines de litres d'inoculum industriel, par dilution puis mise en culture dans des milieux liquides.

### 3) Mise en oeuvre de l'Inoculum fongique

L'inoculum ainsi obtenu peut être utilisé sous forme liquide ou sous forme déshydratée. La déshydratation est généralement obtenue, aprés concentration de la forme liquide, par séchage dans un flux d'air, atomisation ou lyophilisation du concentrat.

L'inoculum industriel finalement obtenu contient de 10⁴ à 10⁸ Thalles ou unités viables par ml ou par g selon les souches et la formulation considérées.

Généralement l'inoculum est ajouté dans l'effluent à traiter à raison de 2 à 20 g d'inoculum industriel par Kg de DCO. Cette inoculation se fait par déversement direct soit dans la lagune, soit dans la cuve selon le système de traitement en place. Le temps de séjour minimum des champignons filamenteux dans l'effluent à traiter doit être de 24 heures.

### Exemple 2 : Résultats des traitements d'effluents selon l'invention

Le procédé de l'invention a été appliqué à la réduction de mauvaises odeurs de lisiers d'élevages de porcs et de canards.

### 1) Elevage de porcs

Destruction des nuisances olfactives soufrées

| Molécules | Lisier brut agité et non-traité | Lisier brut agité et traité |
|---|---|---|
| disulfure de diméthyle | 2701 | 520 |
| trisulfure de diméthyle | 44 | 6 |
| disulfure de méthyle propyl | 10 | 1 |
| méthanethiol | 4 | 1 |

### 2) Elevage de canards

### i) Destruction des nuisances olfactives soufrées

| Molécules | Lisier dégrillé, agité et non-traité | Lisier dégrillé, agité et traité |
|---|---|---|
| disulfure de carbone | 47 | 15 |
| sulfure de diméthyle | 239 | 35 |
| disulfure de diméthyle | 737 | 204 |
| sulfure d'éthylène | 8 | 1 |

### ii) Effet masquant (synthèse de molécules du type cétone « agréables »)

| Molécules | Lisier brut agité et non-traité | Lisier brut agité et traité |
|---|---|---|
| butanone-2 | 3 | 19898 |
| pentanone-2 | 0 | 8 |
| heptanone-2 | 0 | 11 |

## Revendications

1. Procédé de réduction de la nuisance olfactive d'effluents organiques, malodorants, comportant une étape de biodigestion par des champignons filamenteux en culture libre de ces effluents en présence d'oxygène **caractérisé en ce que** l'étape de biodigestion comporte
- une étape de destruction de molécules volatiles malodorantes ou de leurs précurseurs et,
- une étape de masquage par catalyse de la bio-formation dans l'effluent de molécules volatiles ayant des notes aromatiques masquantes ou de leurs précurseurs.

2. Procédé selon l'une quelconque des revendications précédentes, **caractérisé en ce que** les molécules volatiles malodorantes ou leurs précurseurs sont choisis parmi les composés soufrés tels que le disulfure de carbone, le sulfure de diméthyle, le disulfure de diméthyle, le trisulfure de diméthyle, le disulfure méthyle prolpyl, le thiirane, le propane-2-(méthylthio), le butane-2-méthylthio, le pentane-1-(méthylthio) ou le méthanethiol, les acides, les alcools et les furanes.

3. Procédé selon l'une quelconque des revendications précédentes, **caractérisé en ce que** les molécules volatiles ayant des notes aromatiques masquantes ou leurs précurseurs sont choisis dans le groupe des esters ou cétones tels que la butenone-2, le méthyl pentanoate ou le méthyl isovalérate.

4. Procédé selon l'une quelconque des revendications précédentes, **caractérisé en ce qu'**il comporte :
a) une étape de détermination d'au moins l'une de la DCO (demande chimique en oxygène) ou de la DBO (demande biochimique en oxygène) de l'effluent à traiter,
b) une étape de la détermination du taux d'inoculation,
c) une étape d'ensemencement de l'effluent par un inoculum fongique,
d) une étape de biodigestion de l'effluent par lesdits champignons filamenteux en culture libre en présence d'oxygène.

5. Procédé selon la revendication 5, **caractérisé en ce que** l'effluent est gazeux et l'inoculum fongique est supporté sur une phase solide.

6. Procédé selon l'une quelconque des revendications précédentes, **caractérisé en ce que** l'inoculum fongique utilisé à l'étape c) comporte au moins une souche de champignons choisie dans le groupe constitué par les espèces suivantes :
- *Aspergillus phoenicis*
- *Chaetomium globotosum*
- *Galactomyces geotrichum*
- *Mucor hiemalis*
- *Paecilomyces variotii*
- *Fusarium equisetii*
- *Trichoderma viride*
- *Penicillium chrysogenum*
- *Trichoderma longibradriatum*
- *Trichoderma harzianum*
- *Aspergillus niger.*

7. Utilisation d'au moins une souche de champignons choisie dans le groupe constitué par les espèces suivantes:
- *Aspergillus phoenicis*
- *Chaetomium globotosum*
- *Galactomyces geotrichum*
- *Mucor hiemalis*
- *Paecilomyces variotii*
- *Fusarium equisetii*
- *Trichoderma viride*
- *Penicillium chrysogenum*
- *Trichoderma longibradriatum*
- *Trichoderma harzianum*
- *Aspergillus niger,*
pour la préparation d'un inoculum fongique destine à la réduction de la nuisance olfactive d'effluents par biodigestion.
